# EUROPEAN PATENT APPLICATION

(11) **EP 2 927 851 A1**
(43) Date of publication of application: **07.10.2015**
(21) Application number: 14162849.5
(22) Date of filing: 31.03.2014
(51) Int. Cl.: G06Q 10/10

(54) **Referral recruitment method and system with dynamic rating**

(71) Applicant: MFJ Group SA, 1724 Luxembourg (LU)
(72) Inventor: Balzano, Vincent, 57100 Thionville (FR); Moureau, Jérôme, 57310 Guénange (FR); Midy, Christophe, 57300 Mondelange (FR)
(74) Representative: Lecomte & Partners

(57) **Abstract**

The invention is directed to a method for finding and selecting one or several candidates for a vacant job position, comprising the following steps: (a) providing a database for recording the profiles of vacant job positions by recruiter(s), the profiles of active job candidates and the profiles of referrers; (b) when a vacant job position is posted, matching the profile of said position with the profiles of candidates and referrers to identify matching active candidate(s) and referrer(s); (c) informing the matching active candidate(s) and referrer(s) of the vacant job position; (d) enabling the referrer(s) to make a referral to passive candidate(s) about said vacant job position, said referral(s) enabling said candidate(s) to consult, and apply for, said vacant job position as referred candidate(s). The method comprises also: ranking for the recruiter the referred candidates based on the ratings of their referrers and updating the rating of each of the referrer(s), with the results of his referrals.

## Description

### Technical field

The invention is directed to searching, finding and selecting candidates for a vacant job position. More particularly, the invention is directed to an online interactive method for searching, finding and selecting candidates for a vacant job position. The invention is also directed to searching and finding a corresponding vacant job position for a candidate.

### Background art

Prior art patent document published WO 2008/147330 A1 discloses a system and method for managing a referencing recruitment network, such as employment, matrimonial or dating, real estate, automotive referral systems or the like. When a referrer refers a potential candidate for referral and the candidate is a member from the referrer's network of contacts to the seeking user, and the potential candidate applies to the seeking user for approval and the potential candidate is accepted by the seeking user, the referrer is entitled to a reward such as a bonus or a finder's fee from the seeking user. This process is interesting in that it permits passive candidates, who might potentially be interested by and/or qualify with the requirements of the seeking user, to be informed of that demand and have the possibility to apply. It presents however the disadvantage that, depending on the definition of the demand, the seeking user might receive a huge amount of applications that do not comply with his demand.

Prior art patent document published US 2007/0208589 A1 discloses, similarly to the previous document, a system and method for managing a referencing recruitment network conceived for encouraging referrals of persons for employment. Information is stored that identifies each of a plurality of referring parties, that is, information identifying persons or entities that refer a person or entity that is a candidate for a position at an employer party. The person or entity that is referred as a candidate is called a referred party. The referring party supplies the referred party information. When the referred party is placed in a position with an employer, the work performed over time by the referred party at the employer party is tracked and stored. A royalty owed to the referring party based on the work performed by the referred party is then computed. The royalty may be computed on a periodic basis based on the amount of work performed by the referred party during a time interval. Similarly to the above mentioned document, this teaching presents the disadvantage that, depending on the profile of the vacant position, the seeking user might receive a huge amount of applications that do not qualify.

### Summary of invention

### Technical Problem

The invention has for technical problem to provide a method and a system for efficiently searching, finding and selecting qualifying candidates through a referencing recruitment network.

### Technical solution

The invention is directed to a method for searching, finding and selecting one or several candidates for a vacant job position, comprising the following steps: (a) providing a database for recording the profiles of vacant job positions by recruiter(s), the profiles of active job candidates and the profiles of referrers; (b) when a vacant job position is posted, matching the profile of said position with the profiles of candidates and referrers to identify matching active candidate(s) and referrer(s); (c) informing the matching active candidate(s) and referrer(s) of the vacant job position; (d) enabling the referrer(s) to make a referral to passive candidates about said vacant job position, said referral(s) enabling said candidate(s) to consult and apply for said vacant job position as referred candidate(s); wherein the method further comprises: in step (d), ranking, for the recruiter, the referred candidate(s) having applied for the vacant job position, based on a rating of each of the referrer(s) of said candidate(s); (e) assigning a dynamic rating to each of the referrer(s) by updating his rating with the results of his referral(s) to the vacant job position.

According to a preferred embodiment of the invention, the ranking of the referred candidates in step (d) provides a higher ranking to the candidate(s) referred by a referrer with a higher rating.

According to a preferred embodiment of the invention, the ranking of the referred candidates in step (d) provides a higher ranking to the candidate(s) referred by several referrers.

According to a preferred embodiment of the invention, the ranking of the referred candidates in step (d) is based on an average rating of the referrers of each candidate.

According to a preferred embodiment of the invention, the top ranked candidates are displayed on a first level, the less-ranked candidates being displayable on additional level(s).

According to a preferred embodiment of the invention, the ranked candidates are displayed as a list, positioned according to the ranking. The number of referrals, the ranking of the referral(s) and/or a rating of the candidates can be displayed.

According to a preferred embodiment of the invention, the referred candidates applying to the vacant job position are filtered based on their ratings. Candidates with a rating that is below a predetermined level can be filtered out.

According to a preferred embodiment of the invention, the dynamic rating of each of the referrer(s) is the result of his referrals made in the past, this rating being updated with each next referral, an indication of the number of updates preferably being displayed together with the dynamic rating.

According to a preferred embodiment of the invention, the dynamic rating of each of the referrer(s) is the result of an initial rating based on a coherence of his profile when registering said profile in the database, said initial rating being afterwards updated by the results of his referrals.

According to a preferred embodiment of the invention, the initial rating of each of the referrer(s) is based on any one of the following initial criteria and any combination thereof: level of completeness of the profile, matching between professional sector(s) and centre(s) of interest provided in the profile; and matching between professional function(s) and centre(s) of interest provided in the profile.

According to a preferred embodiment of the invention, the initial rating is a numerical value that is an average of numerical grades (G_{I1} to G_{In}) of the initial criteria.

According to a preferred embodiment of the invention, the results of referrals for the dynamic rating are based on any one of the following dynamic criteria and any combination thereof: coherence between the professional sector(s) in the referrer's profile and the professional sector(s) in the vacant job position's profile; coherence between the professional function(s) in the referrer's profile and the professional function(s) in the vacant job position's profile; a grade assigned by the recruiter(s) to the referred candidate; the ratio of referred candidates of the referrer that have been interviewed by the recruiter(s); and the ratio of referred candidates of the referrer that have been hired by the recruiter(s).

According to a preferred embodiment of the invention, the results of referrals for the dynamic rating are a numerical value that is an average of numerical grades of the dynamic criteria.

According to a preferred embodiment of the invention, the dynamic rating of each of the referrer(s) is a numerical value that is an average of numerical grades of the initial and dynamic criteria.

According to a preferred embodiment of the invention, the method further comprises: in step (d), ranking, for the candidate(s), the vacant job positions based on the dynamic rating of each of the recruiter(s) of the vacant job position(s); and (e') assigning a dynamic rating to each of the recruiter(s) by updating his rating with the results of the recruitment process(es) by said recruiter.

According to a preferred embodiment of the invention, the dynamic rating of each of the recruiter(s) is the result of an initial rating, said initial rating being afterwards updated by the recruitment process by said recruiter, an indication of the number of updates preferably being displayed together with the dynamic rating.

According to a preferred embodiment of the invention, the initial rating of each of the recruiter(s) is based on at least one initial criterion comprising the level of completeness of the profile, the initial rating being a numerical value.

According to a preferred embodiment of the invention, the initial rating is a numerical value that is an average of numerical grades of the initial criteria.

According to a preferred embodiment of the invention, the recruitment process(es) for the dynamic rating is based on any one of the following dynamic criteria and any combination thereof: popularity of the recruiter; timeliness of the recruitment process(es), preferably, for each vacant job position; the time between closing the receipt of applications and selecting the candidate(s); and feedback by candidates applying to the vacant job positions.

According to a preferred embodiment of the invention, the recruitment process(es) for the dynamic rating is a numerical value that is an average of numerical grades of the dynamic criteria.

According to a preferred embodiment of the invention, the dynamic rating of each of the recruiter(s) is a numerical value that is an average of numerical grades of the initial and dynamic criteria.

According to a preferred embodiment of the invention, the method further comprises: in step (d), ranking, for the recruiters, the candidates, based also on a rating of each of the candidates; and (e") assigning a dynamic rating to each of the active and/or passive candidate(s) by updating his rating with the referral(s) and/or the feedback of recruiter(s) of vacant job position(s) to which said candidate has applied.

According to a preferred embodiment of the invention, the dynamic rating of each of the active and non-active candidate(s) is the result of an initial rating based on a coherence of his profile when recording said profile in the database, said initial rating being updated by the referral(s) and/or on the feedback of recruiter(s), an indication of the number of updates preferably being displayed together with the dynamic rating.

According to a preferred embodiment of the invention, the initial rating of each of the active candidate(s) is based on at least one initial criterion comprising the level of completeness of the profile, the initial rating being a numerical value.

According to a preferred embodiment of the invention, the initial rating of each of the non-active candidate(s) is based on any one of the following initial criteria and any combination thereof: the level of completeness of the profile when recording said profile in the database; rating of referrer(s) who referred said candidate; number of referrals; and coherence between the profile the vacant job position for which said candidate is referred and the profile of said candidate.

According to a preferred embodiment of the invention, the initial rating is a numerical value that is an average of numerical grades of the initial criteria.

According to a preferred embodiment of the invention, the feedback of recruiter(s) for the dynamic rating is a numerical grade given by each recruiter of vacant job position(s) to which the candidate has applied.

According to a preferred embodiment of the invention, the dynamic rating of each of the candidate(s) is a numerical value that is an average of the initial and dynamic ratings.

The invention is also directed to a computer program comprising instructions that are executable by a computer, wherein the instructions are configured for executing the steps of the method according to the invention when running on said computer.

The invention is also directed to a computer with a storage medium for a computer program, wherein the storage medium comprises a computer program according to the invention.

The invention is also directed to a system for finding and selecting one or several candidates for a vacant job position, comprising: a computer network; one or more computer servers connected to said network; interface modules, preferably computer terminals, connected to said network; wherein the one or more servers are configured for executing the steps of the method according to the invention.

### Advantages of the invention

The invention is particularly interesting in that it provides a powerful and automated tool for users to efficiently search, find and select job and candidates opportunities. The navigation through the job offers and candidates in the platform is rendered more efficient thanks to the ranking based on past results. The dynamic rating is indeed interesting in that it takes advantage of information that can be easily collected from the different users of the platform, to automatically sort and rank the candidates for specific vacant job positions.

The invention has therefore a technical character by producing an automated selection tool.

### Brief description of the drawings

Figure 1 is schematic view of a recruitment platform according to the invention;
Figure 2 is a flowchart illustrating the posting of a job advertisement by a recruiter on the platform of figure 1;
Figure 3 is a flowchart illustrating the initial rating of a referrer upon registration on the platform of figure 1;
Figure 4 is a flowchart illustrating the dynamic rating of a referrer after having referred at least one candidate for a vacant job position;
Figure 5 is a flowchart illustrating the allocation of rating stars depending on the value of the rating;
Figure 6 is a flow chart illustrating the recurrent adjustment of the rating;
Figure 7 is a flowchart illustrating the initial rating of a recruiter upon registration on the platform of figure 1;
Figure 8 is a flowchart illustrating the dynamic rating of a recruiter after having posted a job advertisement;
Figure 9 is a flowchart illustrating the initial rating of a candidate upon registration on the platform of figure 1;
Figure 10 is a flowchart illustrating the dynamic rating of a candidate after having applied to a job advertisement;
Figure 11 is a table showing how the candidates to a vacant job position can be ranked and displayed to the recruiter.

### Description of an embodiment

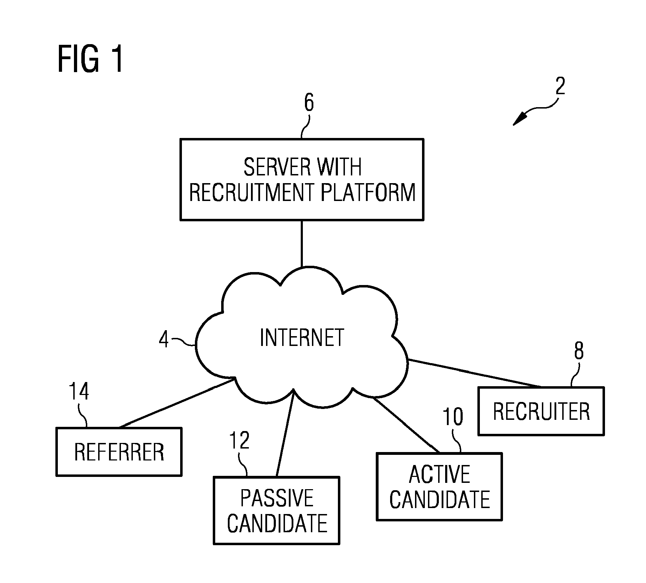

Figure 1 illustrates in a schematic way the architecture of a system for searching, finding and selecting candidate(s) for a vacant job position. In essence, the system 2 comprises a network 4. This network is preferably internet. It can however be any kind of other networks, like for example a private network, wireless or not. If can also be a mobile telephone network. The system 2 comprises also a server or main computer 6 on which a recruitment platform is running and is administrated. The functionalities of the platform will be detailed in connection with the other figures.

The system 2 comprises also interface modules for recruiter(s) 8, active candidate(s) 10, passive candidate(s) 12 and referrer(s) 14. These interface module can be computers, terminals, tablet personal computers, mobile phone or the like. These can be connected to the network by wire or wirelessly.

A recruiter is a person, company or any organization that is searching a candidate for a vacant position and wishes to post a job advertisement on the recruitment platform that is running on the main computer or server 6. An active candidate is a person who has registered his profile on the platform as a job seeker. A non-active candidate is a person who is not yet registered on the platform and who might be interested in taking new job opportunities. A referrer is a person who might not yet be registered on the platform and who has in his circle of friends and relatives people who might be interested in changing job, i.e. potential candidates. A referrer is therefore a person who, for a specific vacant job position, referrers to a passive candidate who he knows and who is likely to correspond to the sought profile and might be interested by the job opportunity.

The principle of the referral is to reach passive (i.e. non-active) candidates through referrers. An incentive for those referrers can be a financial reward in case of success of the referral.

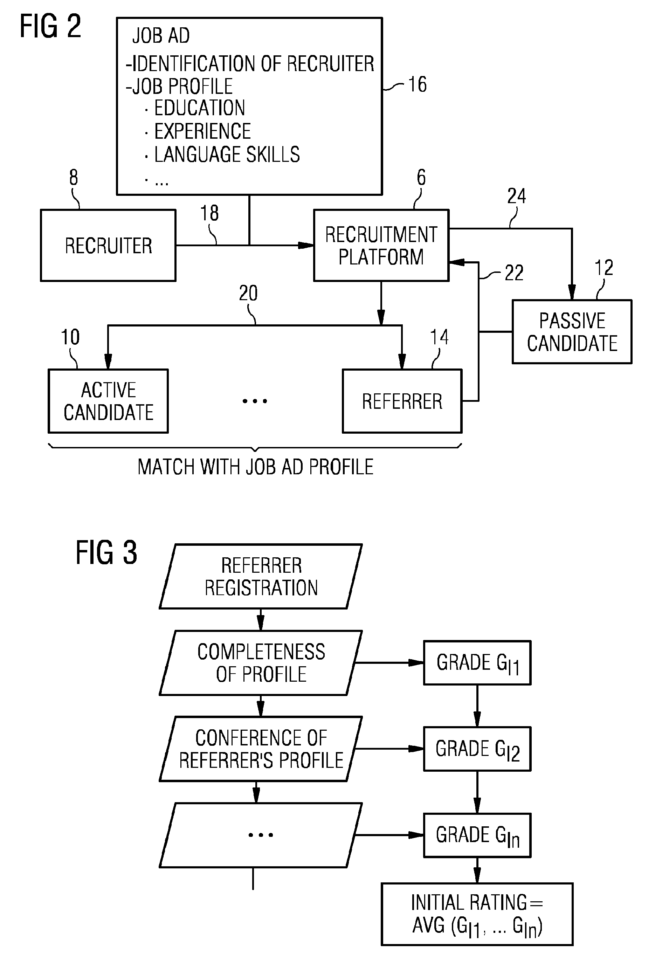

Figure 2 illustrates the principle of the referral in connection with the platform of the invention. A recruiter 8 is posting a job advertisement 16 on the platform 6. The job advertisement 16 comprises a series of information like the identification of the recruiter, i.e. name and address. It comprises also the job profile, like the required education level, the experience, language skills, etc. After the posting action 18 by the recruiter, the platform 6 is configured for checking in its database of active candidates 10 and referrers 14 which of them match with the profile of the job advertisement. To that end, the platform compares the centres of interest of the candidates and referrers with the professional sectors and functions associated with the job profile. For all for which a minimum matching is observed, information about the job advertisement is forwarded, preferably by e-mail. It shall be noted that an active candidate can also be a referrer, i.e. can be a person who declared to be ready to referrer to other persons that he knows.

The referrer 14 having knowledge of the vacant job position can then referrer the platform to a passive candidate that might not yet be registered with the platform. To that end, the referrer can send an e-mail to the platform, in relation with the job advertisement by providing contact details of the passive candidate 12, like his e-mail address. This is the referral action 22. After that action, the platform 6 can then contact the passive candidate 12 by referring to the job advertisement and the referrer(s) who referrers to him. After that action 24, the passive candidate 12 can then decide whether he wants to apply to that vacant job position. As mentioned above, a financial reward can be given to the referrer in case of success of the recruitment process with the candidate or one of the candidates that he has referred to.

It is also to be mentioned that the referrer need not be yet registered with the platform. Indeed, he could have knowledge of the job advertisement by receiving informative e-mails generated by the platform, by consulting newsletters or any information on the website of the platform. In such a case, the referrer will then have to register on the platform.

In order to assist the different parties involved in selecting the candidates, a dynamic rating and corresponding ranking of the referrers, candidates and/or recruiters is implemented. This rating will be described in connection with figures 3 to 10.

A rating is allocated to each referrer from his registration with the platform. This rating is dynamically adjusted afterwards, based essentially on the results or quality of his referrals. This rating can be displayed with any application of the referred candidate at the recruiter of the vacant job position. This rating will permit the recruiter to assess very easily and quickly the quality of the referred candidate.

Figure 3 illustrates the principle of computation of the initial rating of a referrer. Upon registration, the referrer has to provide details about his profile, like his identification, his education, his professional experience, his professional sector, his centres of interest, etc. The level of completeness of the referrer's profile can provide a first grade G_{I1}. Indeed, not all fields to be filled or selected are mandatory fields. The level of completeness of the profile can therefore provide a first indication of the professionalism and seriousness of the referrer. For example, the grade G_{I1} can be numeral with a value of 4 if up to 20% of the profile is filled, 8 if between 20% and 40% of the profile is filled, 12 if between 40% and 60% of the profile is filled, 16 if between 60% and 80% of the profile is filled and 20 if between 80% and 100% of the profile is filled.

The coherence between the professional profile of the referrer and his centre(s) of interest can also provide an indication of the quality and reliability of the future referrals of the referrer. Indeed, any referrer when registering on the platform has to provide the type of function for which he has as centre of interest, in other words the professional function(s) for which he is interested in providing potential referrals. The coherence between the function(s) declared and the own professional profile of the referrer provides an indication of the potential quality of the future referrals. For example, a referrer who would have a background in mechanical engineering and be employed in industry would not necessarily be in the best position to refer for a banker function in a financial institution. A grade G_{I2} can be assigned to that coherence. For example, the grade G_{I2} can be a numeral with a value of 10 in case of non-coherence and 20 in case of coherence.

Additional criteria can be also considered upon registration of the referrer, providing additional grades G_{In}, n being an integer greater than 2.

The initial rating of the referrer is then computed based on the different grades G_{I1} to G_{I1}. It can be the arithmetic mean value of the grades G_{I1} to Gₗₙ, providing a numeral comprised between 0 and 20. Other mathematical functions can be considered, e.g. functions with different weights for the different grades.

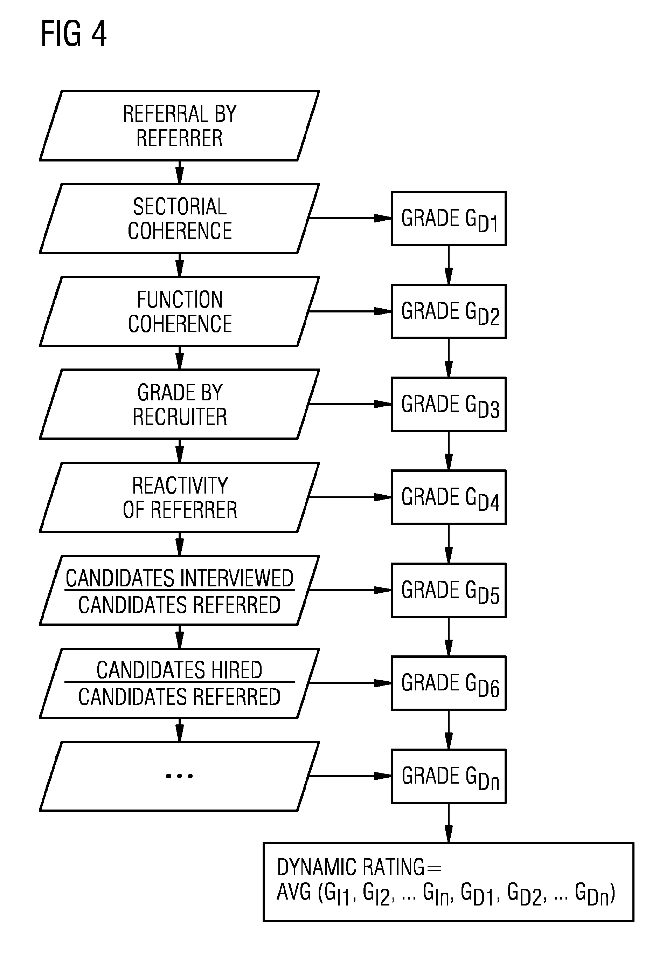

Figure 4 illustrates the dynamic rating of a referrer, i.e. after a referral as described above in relation with figure 2. A series of criteria are applied to the referral to provide respective grades G_{D1} to G_{Dn}, n being an integer greater than 1.

Still with reference to figure 4, the sectorial coherence between the referrer and the referred candidate is a first criterion, i.e. whether both the referrer and the referred candidate are currently active the same sector. Sectors can be taken from the list of: financial and accounting, engineering and technical, construction, drivers, health and social care, etc. This coherence criterion provides a grade G_{D1} which can be a numeral with a value of 20 in case of coherence and 10 in case of non-coherence.

Similarly, the function coherence between the referrer and the referred candidate can be a criterion, providing a grade G_{D2} which can be a numeral with a value of 20 in case of coherence and 10 in case of non-coherence. It can also have a value of 15 in case of non-coherence in the functions and of coherence of the sector (i.e. G_{D1}=20).

If the referred candidate applies to the vacant job position, the recruiter interviews the referred candidate but does not hire said candidate, the recruiter can assign a grade G_{D3} to that referred candidate, this grade G_{D3} being for example a numeral comprised between 0 and 20, being understood that the higher the numeral is the better the grade is.

The reactivity of the referrer, i.e. the time the referrer takes to refer a candidate from receipt of the job advertisement. The resulting grade G_{D4} can be a numeral with a value of 5 if that time is more than 72 hours, 10 if that time is comprised between 48 and 72 hours, 15 if that time is comprised between 24 and 48 hours and 20 if that time is less than 24 hours.

The ratio of the number of candidates referred by the referrer to a job position who have been interviewed by the recruiter to all candidates referred by the referrer to that job position can also be a criterion. A grade G_{D5} being a numeral reflects the ratio is then produced. For example, it can have a value of 4 for a ratio of less than 20%, 8 for a ratio comprised between 20% and 40%, 12 for a ratio comprised between 40% and 60%, 16 for a ratio comprises between 60% and 80%, and 20 for a ratio above 80%.

Similarly, the ratio of the number of candidates referred by the referrer for a job position who have been hired by the recruiter to all candidates referred by the referrer to that job position can also be a criterion. The resulting grade G_{D6} can be a numeral that reflects that ratio. Similarly to the previous criterion, it can have a value of 4 for a ratio of less than 20%, 8 for a ratio comprised between 20% and 40%, 12 for a ration comprised between 40% and 60%, 16 for a ratio comprises between 60% and 80%, and 20 for a ration above 80%.

Additional criteria can also be considered, like for example an active participation in the development of the platform.

The dynamic rating of the referrer can then be computed based on the different initial grades G_{I1} to G_{In} and the dynamic grades G_{D1} to G_{Dn}. It can therefore be the mathematical mean value of the grades G_{I1} to G_{In} and G_{D1} to G_{Dn} providing a numeral comprised between 0 and 20. Other functions can be considered, e.g. functions with different weights for the different grades.

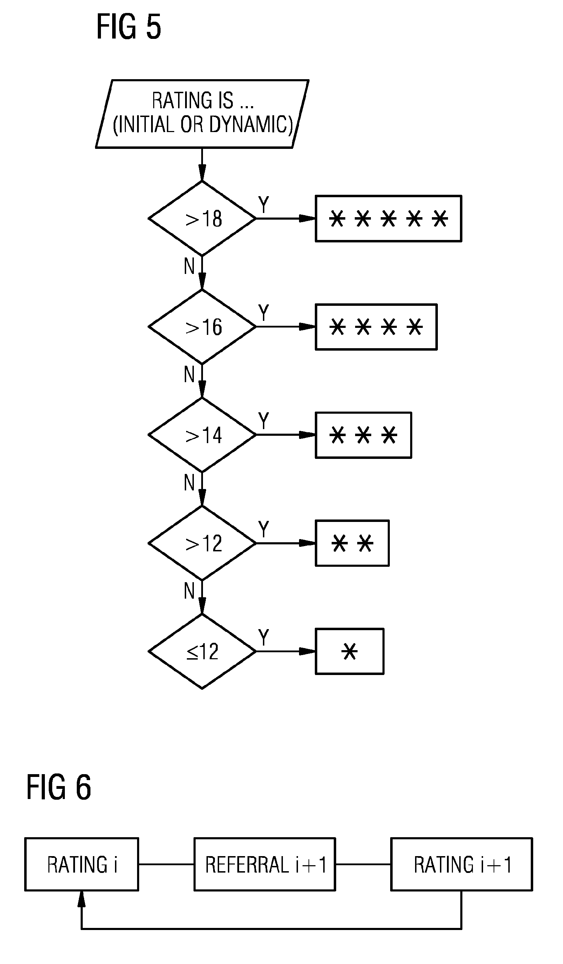

Figure 5 illustrate how the rating can be displayed to the users of the platform. More particularly, the rating of the referrer(s) is displayed to the recruiter(s) together with the referral(s). In accordance with figure 5, the rating can be displayed with stars. For example, a rating that has a value greater than 18 is displayed with five stars. A rating with a value that is comprised between 18 and 16 is displayed with four stars, a rating that is comprised between 16 and 14 is displayed with three stars, a rating comprises between 14 and 12 is displayed with two stars, and a rating that is lower than or equal to 12 is displayed with one star.

Other ways of displaying the rating can of course also be considered. For instance, the value of the rating could indeed be displayed as such, alone or along the above stars system.

Figure 6 illustrates the dynamic of the rating. Indeed, a referrer that has a rating updated further to i referrals, i being an integer greater than 0. After each additional referral i+1, his/her rating is updated based on the referral in accordance with the mechanism that has been detailed in relation with figure 4. Different approaches can be followed for updating the rating. For example, the rating i+1 can be the arithmetic mean value of the previous grades G_{I1} to G_{In} and G_{D1}^{j} to G_{Dn}^{j} with j ranging from 1 to i, and the new ones G_{D1}ⁱ⁺¹ to G_{Dn}ⁱ⁺¹ obtained for the referral i+1, similarly to the computation of the dynamic rating in figure 4. Alternatively, it can be the arithmetic mean value of previous rating i and the new rating i+1. Other mathematical functions can also be considered.

The number of referrals that a referrer has made can also be displayed together with his rating. A certain number of referrals would provide to the recruiter a certain level of confidence that he can have in the referral of this person, in particular if his rating is good.

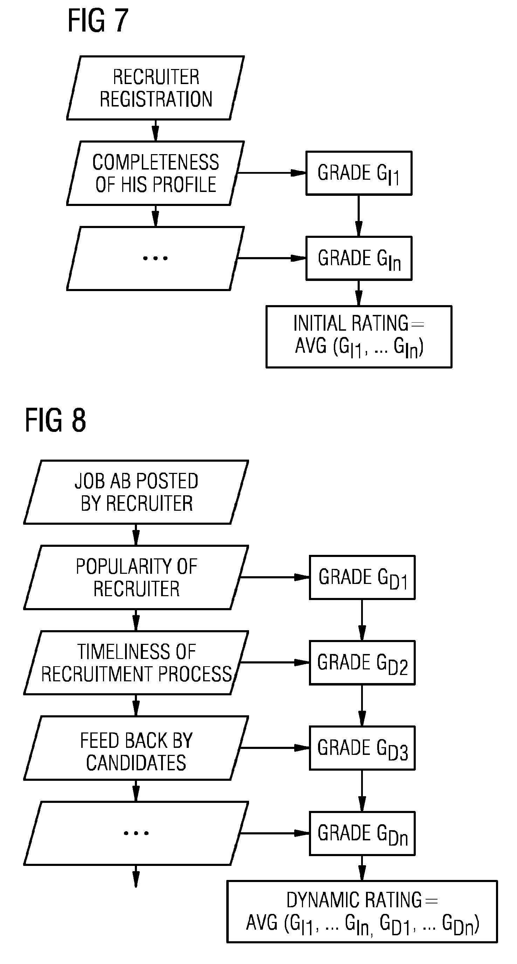

Similarly to the referrers, the recruiters can also be rated, preferably dynamically rated. Figures 7 and 8 illustrate the rating process of the recruiters.

As is visible in figure 7, similarly to the initial rating of referrers when registering with the platform for the first time, recruiters can also be initially rated when registering with the platform. Indeed, when registering, a recruiter is invited to provide a series of information like identification data, activity sector(s), number of employees, VAT number, address for invoicing, commercial register number, etc. One rating criterion can be the completeness when filling out the profile, resulting in a grade G_{I1}. For example, the grade G_{I1} can be a numeral with a value of 4 if up to 20% of the profile is filled, 8 if between 20% and 40% of the profile is filled, 12 if between 40% and 60% of the profile is filled, 16 if between 60% and 80% of the profile is filled and 20 if between 80% and 100% of the profile is filled.

Additional criteria can be also considered upon registration of the referrer, providing additional grades G_{In}, n being an integer greater than 1.

The initial rating of the referrer is then computed based on the different grades G_{I1} to G_{In}. It can be the arithmetic mean value of the grades G_{I1} to G_{In}, providing a numeral comprised between 0 and 20. Other computing functions can be considered, e.g. functions with different weights for the different grades.

Figure 8 illustrates the dynamic rating of a recruiter after having posted a job advertisement as described above in relation with figure 2. A series of criteria are applied to the recruiters to provide respective grades G_{D1} to G_{Dn}, n being an integer greater than 1.

The popularity of the recruiter, more particularly with networkers working the activity sector(s) of the recruiter, can be a criterion.

The timeliness of the recruitment process by the recruiter, more particularly the time elapsed, for each vacant job position, between closing the receipt of applications and selecting the candidate(s), can also be a criterion resulting in a grade G_{D2}. For example, the grade G_{D2} can be a numeral with a value of 5 if the above time is above 8 days, 10 if the time is between 5 and 8 days, 15 if the time is between 3 and 5 days and 20 if the time is less than 3 days.

A feedback by the candidates who have applied to the posted job advertisement can also constitute one or several criteria. The candidates can indeed be invited to provide feedback on different aspects of the recruitment process for the vacant position for which they have applied; more particularly those have been invited to an interview. For example, the candidates can be invited to provide a feedback with regard to formal aspects of the interview, like how well they have been welcome, and also with regard to more substantive aspects like the content of the interview. The feedback can be expressed by different grades like "very good", "good", "medium", "poor" and "very poor", resulting in a grade G_{D3}. For example, the grade G_{D3} can be a numeral with a value of 0 if the above feedback is "very poor", 5 if the feedback is "poor", 10 if the feedback is "medium", 15 if the feedback is "good" and 20 if the feedback if "very good". This criterion can be split in two criteria, one for the formal aspects and one of the substantive aspects of the interview.

Many other criteria can also be considered, like different ethical aspects relating to the behaviour of the recruiter. For example, these aspects can be whether the recruiter has observed a series of obligations like assigning a grade to each candidate that has been interviewed, declaring within a certain time limit (e.g. 5 days) that one (or several) of the candidates has (have) been hired, prompt payment of the recruitment fee, payment of the recruiter's fee for being registered on the platform, ethical engagement with regard to the posted advertisements, etc.

The dynamic rating of the recruiter can then be computed based on the different initial grades G_{I1} to G_{In} and the dynamic grades G_{D1} to G_{Dn}. It can therefore be the arithmetic mean value of the grades G_{I1} to G_{In} and G_{D1} to G_{Dn} providing a numeral comprised between 0 and 20. Other functions can be considered, e.g. functions with different weights for the different grades.

The rating of each recruiter can be displayed with each of the job advertisement(s) by this recruiter. With reference to figure 5 and the above related discussion, this rating can be displayed with stars counted as in the flowchart of figure 5. Other ways of displaying the rating can also be considered. For instance, the value of the rating could indeed be displayed as such, alone or along the above stars system.

With reference to previously discussed figure 6, the rating of each recruiter can therefore be dynamically adapted along the different recruitment processes, thereby providing a consolidated rating. This rating can be an important assistance for the referrers and candidates to decide whether they wish to refer and/or apply to a job advertisement by a recruiter.

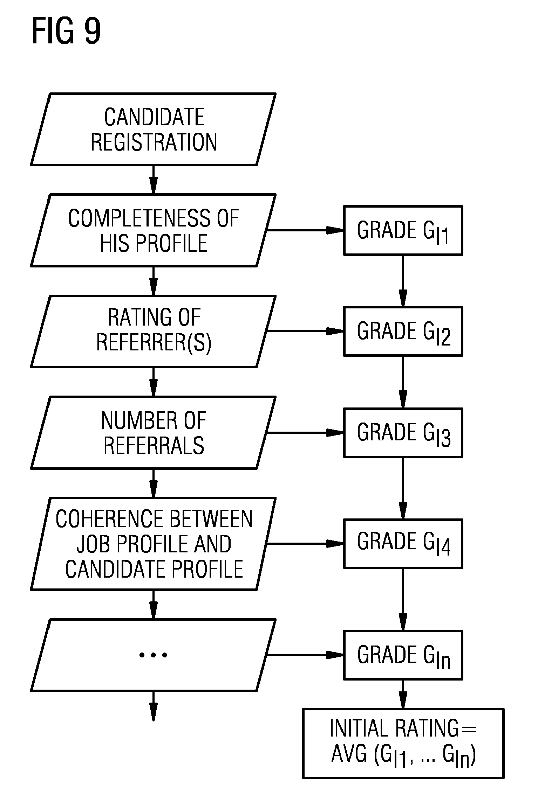

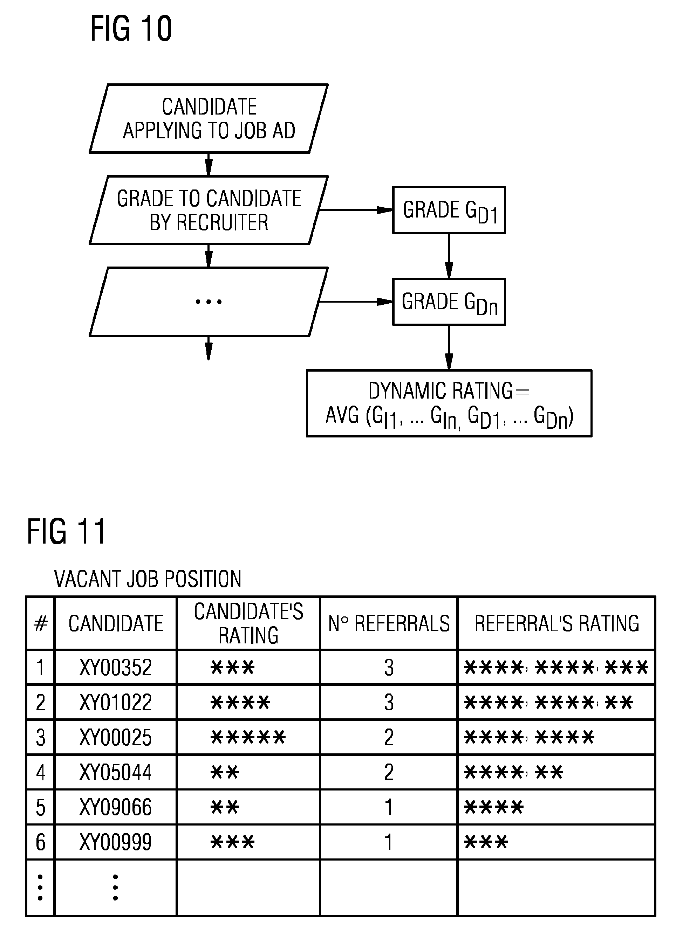

Similarly to the referrers and the recruiters, the candidates can also be rated, preferably dynamically rated. Figures 9 and 10 illustrate the rating process of the candidates.

Among the candidates, there are active candidates, i.e. those who register first with the platform and then wait for job advertisements that correspond to their profile; and passive or non-active candidates, i.e. candidates who are not yet registered on the platform and who register with the platform further to a referral for a job advertisement for applying to that job advertisement.

As is visible in figure 9, similarly to the initial rating of referrers and recruiters when registering with the platform for the first time, the candidates can be initially rated upon their registration.

When registering, a candidate is invited to provide a series of information like identification data, education, experience, functions and/or sectors for which a position is searched, salary expectations, etc. He can also exclude receiving job advertisement of specific companies or employers. One rating criterion can be the completeness when filling out the profile, resulting in a grade G_{I1}. For example, the grade G_{I1} can be a numeral with a value of 4 if up to 20% of the profile is filled, 8 if between 20% and 40% of the profile is filled, 12 if between 40% and 60% of the profile is filled, 16 if between 60% and 80% of the profile is filled and 20 if between 80% and 100% of the profile is filled. This applies to both active and passive candidates.

For passive candidates, i.e. those who register further to a referral, the rating(s) of the referrer(s) who referred that candidate can be also a criterion. The rating of the referrer can become the grade G_{I2}. If several referrers referred that candidate, the grade G_{I2} can be the arithmetic mean value of the ratings of these referrers.

Still for passive candidates, if the candidate is referred by several referrers, the number of referrals can also be a criterion, resulting in a grade G_{I3}. For example, the grade G_{I3} can be a numeral with a value of 5 in case of no referral at all (active candidate), 10 for a single referral, 15 for two referrals and 20 for more than two referrals.

For both passive and active candidates, the coherence or adequacy between the job advertisement and the candidate can also be a criterion. This coherence or adequacy can be based on a matching of different parameters like the sector, the function, the salary, the language skills, etc. For example, the grade G_{I4} can be a numeral with a value of 4 with up to 20% of coherence, 8 with a coherence that is between 20% and 40%, 12 with a coherence that is between 40% and 60%, 16 with a coherence that is between 60% and 80% and 20 with a coherence that is between 80% and 100%.

Additional criteria can also be considered, resulting in additional grades

G_{In}, where n is an integer that is for instance greater than 4.

The initial rating of the candidate is then computed based on the different grades G_{I1} to G_{In}. It can be the arithmetic mean value of the grades G_{I1} to G_{In}, providing a numeral comprised between 0 and 20. Other computing functions can be considered, e.g. functions with different weights for the different grades.

Figure 10 illustrates the dynamic rating of a candidate after having applied for job advertisement, as described above in relation with figure 2.

The recruiter having posted a job advertisement can be invited to assign a grade to each of the candidates who applied. This invitation can be limited to those candidates who have been interviewed to reduce the burden on the recruiter and also provide more reliable grades. A candidate can indeed provide a good or even very good impression during an interview and still not be hired for that job. This would then result in a grade G_{D1} that can correspond to the grade assigned by the recruiter, that grade being a numeral comprised between 0 and 20. Alternatively, the grade G_{D1} can be a numeral with a value of 20 if the grade assigned by the recruiter is above 16, a value of 16 if the assigned grade is comprised between 16 and 14, a value of 13 if the assigned grade is comprised between 14 and 12, a value of 10 if the assigned grade is comprised between 12 and 10, and a value of 5 if the assigned grade is less than 10.

Additional criteria can be considered, providing additional grades G_{Dn}, where n is an integer that is for instance greater than 1.

The dynamic rating of the candidate can then computed based on the different initial grades G_{I1} to G_{In} and the dynamic grades G_{D1} to G_{Dn}. It can therefore be the arithmetic mean value of the grades G_{I1} to G_{In} and G_{D1} to G_{Dn} providing a numeral comprised between 0 and 20. Other functions can be considered, e.g. functions with different weights for the different grades.

The rating of each candidate can be displayed along with their applications to vacant job positions. This rating can be displayed with stars counted as in the flowchart of figure 5. Other ways of displaying the rating can also be considered. For instance, the value of the rating could indeed be displayed as such, alone or along the above stars system.

With reference to previously discussed figure 6, the rating of each candidate can therefore be dynamically adapted along the different recruitment processes, thereby providing a consolidated rating. This rating can be an important assistance for the recruiters selecting the candidates they wish to interview.

Figure 11 is a table illustrating how the candidates to a vacant job position can be ranked and displayed to the recruiter, in principle irrespective of the moment when each of these candidates has applied. The multi-referred candidates are top-ranked, taking into account the number of referrals and also the ratings of each of the referrers. The mono-referred candidates are ranked directly after the multi-referred ones, taking also into account the rating of each referrer. For both the multi- and mono-referred candidates, the above described candidates' rating can also be taken into account but in a lesser importance. The non-referred candidates are ranked after the mono-referred candidates, taking into account the candidates' ratings.

A similar table can be computer and presented to a candidate where the vacant job positions are listed in a similar ranked manner.

## Claims

1. Method for finding and selecting one or several candidates for a vacant job position, comprising the following steps:
(a) providing a database for recording the profiles of vacant job positions by recruiter(s), the profiles of active job candidates and the profiles of referrers;
(b) when a vacant job position is posted, matching the profile of said position with the profiles of candidates and referrers to identify matching active candidate(s) and referrer(s);
(c) informing the matching active candidate(s) and referrer(s) of the vacant job position;
(d) enabling the referrer(s) to make a referral to passive candidate(s) about said vacant job position, said referral(s) enabling said candidate(s) to consult, and apply for, said vacant job position as referred candidate(s);
**characterized in that** the method further comprises:
in step (d), ranking, for the recruiter, the referred candidate(s) having applied for the vacant job position, based on a rating of each of the referrer(s) of said candidate(s); and
(e) assigning a dynamic rating to each of the referrer(s) by updating his rating with the results of his referral(s) to the vacant job position.

2. Method according to claim 1, **characterized in that** the ranking of the referred candidates in step (d) provides a higher ranking to the candidate(s)s referred by a referrer with a higher rating and/or by several referrers.

3. Method according to any one of claims 1 to 2, **characterized in that** the referred candidates applying to the vacant job position are filtered based on their ratings, candidates with a rating that is below a predetermined level being preferably filtered out.

4. Method according to any one of claims 1 to 3, **characterized in that** the dynamic rating of each of the referrer(s) is the result of his referrals made in the past, this rating being updated with each next referral.

5. Method according to any one of claims 1 to 4, **characterized in that** the dynamic rating of each of the referrer(s) is the result of an initial rating based on a coherence of his profile when recording said profile in the database, said initial rating being updated by the quality of his referrals, the initial rating of each of the referrer(s) being preferably based on any one of the following initial criteria and any combination thereof: level of completeness of the profile, matching between professional sector(s) and centre(s) of interest provided in the profile and matching between professional function(s) and centre(s) of interest provided in the profile, and the initial rating being preferably a numerical value that is an average of numerical grades (G_{I1} to G_{In}) of the initial criteria.

6. Method according to any one of claims 1 to 5, **characterized in that** the results of referrals for the dynamic rating is based on any one of the following dynamic criteria and any combination thereof: coherence between the professional sector(s) in the referrer's profile and the professional sector(s) in the vacant job position's profile; coherence between the professional function(s) in the referrer's profile and the professional function(s) in the vacant job position's profile; a grade assigned by the recruiter(s) to the referred candidate; the ratio of referred candidates of the referrer that have been interviewed by the recruiter(s); and the ratio of referred candidates of the referrer that have been hired by the recruiter(s), the quality of referrals for the dynamic rating being preferably a numerical value that is an average of numerical grades (G_{D1} to G_{Dn}) of the dynamic criteria, and the dynamic rating of each of the referrer(s) being preferably a numerical value that is an average of numerical grades (G_{I1} to G_{In}, G_{D1} to G_{Dn}) of the initial and dynamic criteria.

7. Method according to any one of claims 1 to 6, **characterized in that** the method further comprises:
in step (d), ranking, for the candidate(s), the vacant job positions based on the dynamic rating of each of the recruiter(s) of the vacant job position(s); and
(e') assigning a dynamic rating to each of the recruiter(s) by updating his rating with the results of the recruitment process(es) by said recruiter.

8. Method according to claim 7, **characterized in that** the dynamic rating of each of the recruiter(s) is the result of an initial rating, said initial rating being updated by the recruitment process by said recruiter, an indication of the number of updates preferably being displayed together with the dynamic rating, the initial rating of each of the recruiter(s) being preferably based on at least one initial criterion comprising the level of completeness of the profile, the initial rating being a numerical value, and the initial rating being preferably a numerical value that is an average of numerical grades (G_{I1} to G_{In}) of the initial criteria.

9. Method according to any one of claims 7 to 8, **characterized in that** the recruitment process(es) for the dynamic rating is based on any one of the following dynamic criteria and any combination thereof: popularity of the recruiter; timeliness of the recruitment process(es), preferably, for each vacant job position; the time between closing the receipt of applications and selecting the candidate(s); and feedback by candidates applying to the vacant job positions, the recruitment process(es) for the dynamic rating being preferably a numerical value that is an average of numerical grades of the dynamic criteria.

10. Method according to claims 8 and 9, **characterized in that** the dynamic rating of each of the recruiter(s) is a numerical value that is an average of numerical grades (G_{I1} to G_{In}, G_{D1} to G_{Dn}) of the initial and dynamic criteria.

11. Method according to any one of claims 1 to 10, **characterized in that** the method further comprises:
in step (d), ranking, for the recruiters, the candidates, based also on a rating of each of the candidates; and
(e") assigning a dynamic rating to each of the active and/or passive candidate(s) by updating his rating with the referral(s) and/or the feedback of recruiter(s) of vacant job position(s) to which said candidate has applied.

12. Method according to claim 11, **characterized in that** the dynamic rating of each of the candidate(s) is the result of an initial rating based on a coherence of his profile when recording said profile in the database, said initial rating being updated by the referral(s) and/or on the feedback of recruiter(s), an indication of the number of updates preferably being displayed together with the dynamic rating, the initial rating of each of the active candidate(s) being preferably based on at least one initial criterion comprising the level of completeness of the profile, the initial rating being a numerical value, the initial rating of each of the passive candidate(s) being preferably based on any one of the following initial criteria and any combination thereof: the level of completeness of the profile when recording said profile in the database; rating of referrer(s) who referred said candidate; and number of referrals; coherence between the profile the vacant job position for which said candidate is referred and the profile of said candidate, the initial rating being preferably a numerical value that is an average of numerical grades (G_{I1} to G_{In}) of the initial criteria, the feedback of recruiter(s) for the dynamic rating being preferably a numerical grade given by each recruiter of vacant job position(s) to which the candidate has applied, and the dynamic rating of each of the candidate(s) being preferably a numerical value that is an average of the initial and dynamic ratings.

13. A computer program comprising instructions that are executable by a computer, **characterized in that** the instructions are configured for executing the steps of the method according to any one of claims 1 to 12 when running on said computer.

14. A computer with a storage medium for a computer program, **characterized in that** the storage medium comprises a computer program according to claim 13.

15. A system for finding and selecting one or several candidates for a vacant job position, comprising:
- a computer network;
- one or more computer servers connected to said network;
- interface modules, preferably computer terminals, connected to said network;
**characterized in that**
the one or more servers are configured for executing the steps of the method according to any one of claims 1 to 12.
